(19) Europäisches Patentamt
European Patent Office
Office européen des brevets

(11) **EP 1 179 818 B1**

(12) **EUROPÄISCHE PATENTSCHRIFT**

(45) Veröffentlichungstag und Bekanntmachung des Hinweises auf die Patenterteilung:
**28.05.2008   Patentblatt 2008/22**

(51) Int Cl.:
*G10L 15/18* (2006.01)     *G10L 15/06* (2006.01)

(21) Anmeldenummer: **01000350.7**

(22) Anmeldetag: **06.08.2001**

(54) **Automatische Erkennung von Unternehmensnamen in sprachlichen Äusserungen**

Automatic recognition of company names in spoken utterances

Reconnaissance automatique de noms d'entreprises dans des discours parlés

(84) Benannte Vertragsstaaten:
**DE ES FR GB IT**

(30) Priorität: **08.08.2000   DE 10038517**

(43) Veröffentlichungstag der Anmeldung:
**13.02.2002   Patentblatt 2002/07**

(73) Patentinhaber:
• **Philips Intellectual Property & Standards GmbH
20099 Hamburg (DE)**
Benannte Vertragsstaaten:
**DE**
• **Koninklijke Philips Electronics N.V.
5621 BA  Eindhoven (NL)**
Benannte Vertragsstaaten:
**ES FR GB IT**

(72) Erfinder: **Rose, Georg
52064 Aachen (DE)**

(74) Vertreter: **Volmer, Georg
Philips Intellectual Property & Standards GmbH,
Postfach 50 04 42
52088 Aachen (DE)**

(56) Entgegenhaltungen:
**EP-A- 0 645 757          US-A- 5 212 730
US-A- 5 390 278**

**Beschreibung**

Die Erfindung betrifft ein Verfahren zur automatischen Erkennung von Unternehmensnamen in sprachlichen Äußerungen. Die Erfindung betrifft ebenso ein Dialogsystem, insbesondere Auskunftssystem, mit einer Verarbeitungseinheit zur automatischen Erkennung von Unternehmensnamen in sprachlichen Äußerungen.

Bei Dialog- bzw. Auskunftssystemen wie beispielsweise bei Telefonauskunftssystemen bereitet die Erkennung von Unternehmensnamen besondere Schwierigkeiten. Diese beruhen darauf, dass von Benutzern bei der sprachlichen Eingabe von Unternehmensnamen regelmäßig kein vorgegebenes festes Format noch eine bestimmte Syntax eingehalten werden. So werden häufig Teile eines Unternehmensnamens bei einer Eingabe weggelassen, es werden Abkürzungen gebildet, Akronyme verwendet oder auch Bestandteile des Unternehmensnamens vertauscht. Dies führt zu unbefriedigenden Ergebnissen bei der automatischen Erkennung von Unternehmensnamen.

Zur Verbesserung von Spracherkennungsergebnissen in einem Informationssuchsystem (Information Retrieval System) wird in der EP 0 645 757 B1 vorgeschlagen, aus einer bei der eigentlichen Spracherkennung ermittelten Wortfolgenhypothese eine Datenbankabfrage mit einer bestimmten Abfragesyntax zu bilden. Diese Datenbankabfrage wird dann genutzt, um die verschiedensten Dokumente im Korpus der Datenbank des Informationssuchsystems zu durchsuchen. Dabei wird geprüft, ob und wie oft bestimmte, den Wortfolgenhypothesen entsprechende Begriffsfolgen im Kontext des Datenbankkorpus auftreten. Dieser Vorgang ist jedoch leider entsprechend zeitaufwendig. Daher ist dieses Verfahren z. B. für Telefonauskunftssysteme, bei denen besonders häufig Unternehmensnamenunter oft schwierigen Übermittlungsbedingungen erkannt werden müssen und die Erkennung in einer relativ kurzen Zeit und möglichst sicher erfolgen muss, um die Akzeptanz der Nutzer des Systems nicht zu verlieren, nicht besonders gut geeignet. Zudem wäre dieses Verfahren immer dann nicht nutzbar, wenn als Unternehmensname vom Nutzer nur ein Wort eingegeben wird.

Der Erfindung liegt daher die Aufgabe zugrunde, in Dialog- bzw. Auskunftssystemen, insbesondere in Telefonauskunftssystemen, die Fehlerrate bei der automatischen Erkennung von Unternehmensnamen in sprachlichen Äußerungen zu reduzieren.

Die Aufgabe wird durch ein Verfahren gemäß Patentanspruch 1 und ein Dialogsystem gemäß Patentanspruch 7 gelöst.

Die noch mit einer hohen Fehlerrate behafteten Erkennungsergebnisse eines üblicherweise verwendeten Spracherkenners werden gemäß der Erfindung einer Nachverarbeitung unterzogen. Hierbei wird eine Datenbank verwendet, in der sämtliche für die jeweilige Anwendung zulässigen Unternehmensnamen gespeichert sind. Durch das Ausnutzen der Datenbankinformationen lassen sich beispielsweise unsinnige Spracherkennungsergebnisse korrigieren. Auch eine Selektion des besten vom Spracherkenner gelieferter verschiedener Erkennungsergebnisalternativen lasst sich so realisieren.

Vorzugsweise werden in der Datenbank die Unternehmensnamen in der juristisch korrekten Form abgelegt. Eine vom Spracherkenner gelieferte Wortfolgenhypothese bzw. eine Liste N bester Wortfolgenhypothesen wird dabei mit den Datenbankeinträgen abgeglichen. Dabei wird in der Datenbank nach den Wortfolgenhypothesen in ihrer Gesamtheit und nach Bestandteilen der Wortfolgenhypothesen gesucht. Mit Hilfe des Ergebnisses der Suche wird nun unter Berücksichtigung der vom Spracherkenner gelieferten Wortfolgenhypothese(n) einen in der Datenbank gespeicherter Unternehmensname als Erkennungsergebnis selektiert. Liefert der Spracherkenner für eine eingegebene sprachliche Äußerung jeweils nur eine Wortfolgenhypothese, und lässt sich kein Unternehmensname finden, der vollständig in dieser Wortfolgenhypothese repräsentiert ist, so wird ein Unternehmensname selektiert werden, der wenigstens teilweise in der Wortfolgenhypothese enthalten ist. Liefert der Spracherkenner für eine sprachliche Äußerung mehrere Wortfolgenhypothesen, wird der Abgleich mit den Datenbankeinträgen entsprechend erweitert und die in Anbetracht der in der Datenbank gespeicherten Unternehmensnamen beste Wortfolgenhypothese ermittelt.

Vorteilhafte Ausgestaltungen der Erfindung sind in den Unteransprüchen angegeben.

Ausführungsbeispiele der Erfindung werden nachfolgend anhand der Zeichnungen näher erläutert. Es zeigen:

Fig. 1    ein an ein öffentliches Telefonnetz angeschlossenes Dialogsystem und

Fig 2    eine Verarbeitungseinheit zur automatischen Erkennung von Unternehmensnamen in sprachlichen Äußerungen, die in Dialogsystem gemäß Fig.1 verwendet wird.

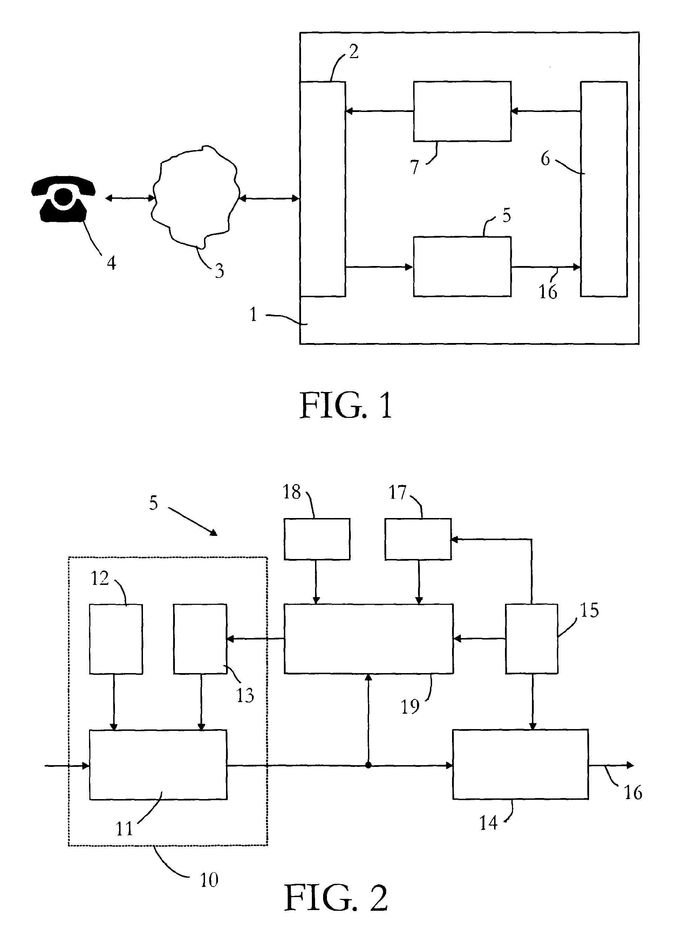

Das in Fig. 1 gezeigte Dialogsystem 1, bspw. ein Telefonauskunftsystem, ist mittels einer Schnittstelle 2 mit einem öffentlichen Telefonnetz (PSTN) 3 gekoppelt, so dass ein Benutzer mittels eines Telefonendgeräts 4 auf das Dialogsystem 1 zugreifen kann. Eine sprachliche Äußerung eines Benutzers kann so über das Telefonendgerät 4, dass öffentliche Telefonnetz 3 und die Schnittstelle 2 einer Verarbeitungseinheit 5, die zur Umsetzung von Sprache in Text dient, zugeführt werden. Die Verarbeitungseinheit 5 liefert ein Erkennungsergebnis, dass einer Dialogkontrolleinheit 6 zugeführt wird, die in Abhängigkeit von der jeweiligen Anwendung eine geeignete an den Benutzer zu übertragende Sprachausgabe bestimmt. Ein auszugebendes Sprachsignal wird von einer Verarbeitungseinheit 7 zur Umsetzung von Text in Sprache (z B. Sprachsyntheseeinheit) generiert, wobei die jeweilige Sprachausgabe von Steuersignalen abhängt, die von der Dialogkontrolleinheit 6 an die Verarbeitungseinheit 7 übertragen werden.

Die Verarbeitungseinheit 5 ist insbesondere so ausgeführt, dass Unternehmensnamen mit einer geringen Fehlerrate erkannt werden. Die hierzu getroffenen Maßnahmen erläutert das Blockschaltbild gemäß Fig. 2, das die entsprechende Ausgestaltung der Verarbeitungseinheit 5 zeigt. Eine von der Schnittstelle 2 kommende und als elektrisches Signal vorliegende Sprachäußerung wird hier von einem Spracherkenner 10 mit einem auf Hidden-Markow-Modellen (HMM) basierenden Spracherkennerkern 11 unter Verwendung eines akustische Referenzen aufweisenden akustischen Modells 12 und eines Sprachmodells 13 in üblicher Weise ausgewertet. Als Erkennungsergebnis liefert der Spracherkenner 10 eine Wortfolgenhypothese, die ein oder mehrere einen Untemehmensnamen beschreibende Worte und gegebenenfalls noch weitere keine für die Erkennung eines Unternehmensnamens verwertbare Worte enthält. Block 14 kennzeichnet eine Vergleichseinheit, die einen Vergleich der vom Spracherkenner 10 gelieferten Wortfolgenhypothese mit Einträgen einer Datenbank 15 durchführt. In der Datenbank 15 sind dabei für die jeweilige Anwendung zulässige Unternehmensnamen gespeichert, wobei insbesondere die juristisch korrekte Schreibweise verwendet wird Dabei ist es vorteilhaft, bestimmte a priori festgelegte Wörter, welche kaum oder gar nicht zur Unterscheidung der Unternehmensnamen beitragen (Artikel, häufig vorkommende Füllwörter), aus den juristischen Namen innerhalb der Datenbank 15 - und konsequenter Weise auch aus den Wortfolgenhypothesen des Spracherkenners 10 - zu streichen und beim Vergleich in Block 14 nicht zu berücksichtigen. Die Datenbank 15 enthält dann auch Einträge mit den gegebenenfalls entsprechend verkürzten Unternehmensnamen, die dann anstelle der ungekürzten Unternehmensnamen dem Vergleich mit einer Wortfolgenhypothese zugrundegelegt werden. Dieses hat den Vorteil, das der Vergleich in Block 14 beschleunigt wird, weil keinerlei Bewertung dieser Füllwörter stattfindet. Bei dem Vergleich in Block 14 wird zunächst nach einem in der Datenbank 15 gespeicherten Eintrag gesucht, der vollständig in der vom Spracherkenner 10 gelieferten Wortfolgenhypothese enthalten ist. Ist dies der Fall, wird dieser Unternehmensname als Erkennungsergebnis 16 ausgegeben. Ist dies nicht der Fall, wird nach einem Datenbankeintrag gesucht werden, der einen Unternehmensnamen enthält, der wenigstens teilweise in der Wortfolgenhypothese enthalten ist. Dabei sind vorzugsweise bestimmte Anteile von Unternehmensnamen als besonders kennzeichnend definiert und bspw. mit einem entsprechend großen Gewichtungsfaktor versehen, der bei dem Vergleich gemäß Block 14 berücksichtigt wird. So wird z.B. beim Unternehmensnamen Philips GmbH der Bestandteil "Philips" einen höheren Wichtungsfaktor erhalten als der Bestandteil "GmbH". Beim Unternehmennamen "Deutsche Telekom" wird der Bestandteil "Telekom" einen höheren Wichtungsfaktor erhalten als der Bestandteil "Deutsche". In der Datenbank 15 gespeicherte Worte, die als keine für die Erkennung eines Unternehmensnamens verwertbare Informationen tragende Worte definiert sind, werden zur Reduktion der Wortfolgenhypothese um entsprechende Bestandteile verwendet. Beispiele für solche Worte sind Artikel, Präpositionen, Füllworte usw.

Eine beim Vergleich in Block 14 benutzte Suchmaschine arbeitet in einer bevorzugten Ausführungsform folgendermaßen: Stimmt ein vom Spracherkenner 10 geliefertes Erkennungsergebnis exakt mit einem Eintrag in der Datenbank 15 überein, so erhält dieser Eintrag die höchste Bewertung - andere Datenbankeinträge, welche nur in Teilen übereinstimmen, können dennoch als Alternativen ausgegeben werden. Vorzugsweise liefert der Spracherkenner 10 für eine sprachliche Äußerung nicht nur eine Wortfolgenhypothese, sondern mehrere N beste Wortfolgenhypothesen (N >1). Diese sind entsprechend einer vom Spracherkenner 10 ermittelten Wahrscheinlichkeit sortiert, was von der Vergleichseinheit 14 berücksichtigt wird Insbesondere werden nicht nur N beste Wortfolgenhypothesen für eine sprachliche Äußerung an die Vergleichseinheit 14 gegeben, sondern außerdem noch für jede Wortfolgenhypothese ein Wahrscheinlichkeitswert, wobei Spracherkenner zur Lieferung N bester Erkennungsergebnisse mit entsprechenden Wahrscheinlichkeiten $P_{Nbest}$(Unternehmensname) bekannt sind. Auch die Vergleichseinheit 14 liefert durch Auswertung der Einträge der Datenbank 15 Wahrscheinlichkeiten $P_{Vergleichseincheit}$ *(Unternehmensname)* für jeden gefundenen *Unternehmensname*n. Die Gewichtung der finalen Suchresultate kann dann zB. durch die Gesamtwahrscheinlichkeit:

$$P(Unternehmensname) = P_{Nbest}(Unternehmensname) * P_{Vergleichseinheit}(Unternehmensname)$$

erfolgen. Dieses wird unter der vereinfachten Annahme durchgeführt, dass die Spracherkennung und die Vergleichseinheit statistisch unabhängig sind

Block 19 kennzeichnet die Bestimmung der Sprachmodellwerte des Sprachmodells 13. In einer Trainingsphase werden hierzu die Einträge der Datenbank 15 ausgewertet. Verbesserungen bei der Bildung des Sprachmodells 13 werden dadurch erreicht, dass a priori als sinnvoll definierte Varianten (z.B. sinnvolle Vertauschungen von Namensbestandteilen, umgangssprachliche Formulierungen wie z. B. "Big Blue", u.ä) der in der Datenbank 15 gespeicherten Unternehmensnamen (Block 17) bei dem Training des Sprachmodells 13 einfließen. Eine weitere Verbesserung des Trainings des Sprachmodells 13 wird dadurch erreicht, dass Daten, die mittels sich bereits im Einsatz befindlicher Dialogsysteme aus tatsächlichen Anfragen bzw. Dialogen gewonnen wurden, ebenfalls in das Training einfließen (diese Daten kennzeichnet Block 18). Diese können auf zweierlei Weisen einfließen: einerseits dadurch, dass sie einfach dem Trainingsmaterial hinzugefügt werden, und andererseits dadurch, dass die darin enthaltenen Häufigkeiten von Anfragen nach bestimmten Firmen als Gewichtung (im Sinne eines Unigramms) in das Trainingsmaterial bestehend aus den reinen Datenbankeinträgen einfließen. Weiterhin ist beim vorliegenden Spracherkenner 10 eine Online-Adaption des Sprachmodells 13 vorgesehen, die zur weiteren Absenkung der Fehlerrate bei der Erkennung eingegebener Unternehmensnamen führt. Für die Online-Adaption werden die vom Spracherkenner 10 im Betrieb des Dialogsystems 1 gewonnenen Wortfolgenhypothesen verwendet. Die Algorithmen zur Sprachmodelladaption sind ebenso wie die Algorithmen zum Sprachmodetitraining bekannt und werden von Block 19 zusammengefasst.

## Patentansprüche

1. Verfahren zur automatischen Erkennung von Unternehmensnamen in sprachlichen Äußerungen, bei dem

   - mittels eines Spracherkenners (10) aus einer aus ein oder mehreren Worten bestehenden Sprachäußerung mindestens eine Wortfolgenhypothese erzeugt wird,
   - ein Vergleich der Wortfolgenhypothese mit in einer Datenbank (15) gespeicherten Unternehmensnamen repräsentierenden Einträgen durchgeführt wird,
   - in Abhängigkeit vom Ergebnis des Vergleichs ein Unternehmensname als Erkennungsergebnis (16) selektiert wird.

2. Verfahren nach Anspruch 1,
   **dadurch gekennzeichnet,**
   **dass** der Spracherkenner (10) für jede Wortfolgenhypothese einen Wahrscheinlichkeitswert liefert, der bei dem Vergleich berücksichtigt wird.

3. Verfahren nach Anspruch 1 oder 2,
   **dadurch gekennzeichnet,**
   **dass** mittels vom Spracherkenner (10) gelieferter Wortfolgenhypothesen eine Adaption eines vom Spracherkenner (10) verwendeten Sprachmodells (13) durchgeführt wird.

4. Verfahren nach einem der Ansprüche 1 bis 3,
   **dadurch gekennzeichnet,**
   **dass** beim Vergleich einer Wortfolgenhypothese mit Einträgen der Datenbank (15) bestimmte a priori festgelegte Worte nicht berücksichtigt werden

5. Verfahren nach einem der Ansprüche 1 bis 4,
   **dadurch gekennzeichnet,**
   **dass** der Spracherkenner (10) ein Sprachmodell (13) verwendet, das mit Hilfe der in der Datenbank (15) gespeicherten Informationen trainiert wurde.

6. Verfahren nach Anspruch 5,
   **dadurch gekennzeichnet,**
   **dass** beim Training der Sprachmodells (13) sinnvolle Varianten von Unternehmensnamen berücksichtigt wurden.

7. Dialogsystem, insbesondere Auskunftssystem, mit einer Verarbeitungseinheit (5) zur automatischen Erkennung von Unternehmensnamen in sprachlichen Äußerungen, die

   - einen Spracherkenner (10) aufweist, der zur Erzeugung mindestens einer Wortfolgenhypothese aus einer aus ein oder mehreren Worten bestehenden Sprachäußerung dient,

   eine Vergleichseinheit (14) aufweist, die zur Durchführung eines Vergleichs der Wortfolgenhypothese mit in einer Datenbank (15) gespeicherten Unternehmensnamen repräsentierenden Einträgen und zur Selektion eines Unternehmensnamens als Erkennungsergebnis (16) in Abhängigkeit vom Ergebnis des Vergleichs vorgesehen ist.

**Claims**

1. A method of automatic recognition of company names in speech utterances, in which:

   - at least one word sequence hypothesis is generated by a speech recognizer (10) from a speech utterance consisting of one or more words,
   a comparison is made of the word sequence hypothesis with entries which represent company names and are stored in a database (15),
   a company name is selected as a recognition result (16) in dependence on the result of the comparison.

2. A method as claimed in claim 1,
   **characterized in that**
   the speech recognizer (10) produces a probability value for each word sequence hypothesis, which probability value is taken into account for the comparison.

3. A method as claimed in claim 1 or 2,
   **characterized in that**
   word sequence hypotheses produced by the speech recognizer (10) are used for an adaptation of a speech model (13) utilized by the speech recognizer (10).

4. A method as claimed in any one of the claims 1 to 3,
   **characterized in that**
   certain words defined a priori are not taken into account when a word sequence hypothesis is compared with entries of the database (15).

5. A method as claimed in any one of the claims 1 to 4,
   **characterized in that**
   the speech recognizer (10) utilizes a speech model (13) which was trained with the aid of the information stored in the database (15).

6. A method as claimed in claim 5,
   **characterized in that**
   appropriate variants of company names are taken into account during the training of the speech model (13).

7. A dialog system, more particularly, an inquiry system, comprising a processing unit (5) for automatically recognizing company names in speech utterances, which system comprises:

   - a speech recognizer (10), which is used for generating at least one word sequence hypothesis from a speech utterance consisting of one or more words,
   a comparing unit (14), which is provided for making a comparison of the word sequence hypothesis with entries representing company names stored in a database (15) and for selecting a company name as a recognition result (16) in dependence on the result of the comparison.


**Revendications**

1. Procédé de reconnaissance automatique de noms d'entreprises dans des expressions vocales dans lequel

   - au moins une hypothèse de séquences de mots est produite à l'aide d'un dispositif de reconnaissance vocale (10) à partir d'une expression vocale composée d'un ou plusieurs mots;
   - une comparaison de l'hypothèse de séquences de mots est opérée avec des entrées représentants des noms d'entreprises enregistrés dans une base de données (15);
   - en fonction du résultat de la comparaison, un nom d'entreprise est choisi comme résultat de reconnaissance (16).

2. Procédé selon la revendication 1,
   **<u>caractérisé en ce</u> que** le dispositif de reconnaissance vocale (10) délivre pour chaque hypothèse de séquences de mots une valeur de probabilité qui est prise en considération lors de la comparaison.

**3.** Procédé selon l'une des revendications 1 ou 2,
<u>**caractérisé en ce**</u>
**qu'**une adaptation d'un modèle de parole (13) utilisé par le dispositif de reconnaissance vocale (10) est effectuée à l'aide d'hypothèses de séquences de mots délivrées par le dispositif de reconnaissance vocale (10).

**4.** Procédé selon l'une des revendications 1 à 3,
<u>**caractérisé en ce**</u>
**que** certains mots définis a priori ne sont pas pris en considération lors de la comparaison d'une hypothèse de séquences de mots avec des entrées de la base de données (15).

**5.** Procédé selon l'une des revendications 1 à 4,
<u>**caractérisé en ce**</u>
**que** le dispositif de reconnaissance vocale (10) utilise un modèle vocal (13) qui a été formé à l'aide des informations enregistrées dans la base de données (15).

**6.** Procédé selon la revendication 5,
<u>**caractérisé en ce que**</u> des variantes porteuses de sens de noms d'entreprises ont été prises en considération lors de la formation du modèle de parole (13).

**7.** Système de dialogue, en particulier système de renseignements, avec une unité de traitement (5) pour la reconnaissance automatique de noms d'entreprises dans des expressions vocales qui présente:

- un dispositif de reconnaissance vocale (10) qui sert à la production d'au moins une hypothèse de séquences de mots à partir d'une expression vocale composée d'un ou plusieurs mots;
- une unité de comparaison (14) qui est prévue pour l'exécution d'une comparaison de l'hypothèse de séquences de mots avec un nom d'entreprise enregistré dans une base de données (15) et pour la sélection d'un nom d'entreprise comme le résultat d'une reconnaissance (16) en fonction du résultat de la comparaison.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0645757 B1